# EUROPÄISCHE PATENTSCHRIFT

(11) **EP 2 325 573 B1**
(45) Veröffentlichungstag und Bekanntmachung des Hinweises auf die Patenterteilung: **09.09.2015**
(21) Anmeldenummer: 10014759.4
(22) Anmeldetag: 18.11.2010
(51) Int. Cl.: F04D 19/00, F04D 25/12, F04D 29/70, F28D 20/02, F28D 20/00, F24F 5/00, F24F 7/013, F24F 12/00, F24F 13/20

(54) **Gebäude-Be-und Entlüftungsvorrichtung**
Building ventilation device
Dispositif d'aération et d'évacuation d'air pour un bâtiment

(30) Priorität: 19.11.2009 DE 102009053994
(43) Veröffentlichungstag der Anmeldung: 25.05.2011
(73) Patentinhaber: Poloplast GmbH & Co. KG, 4060 Leonding (AT)
(72) Erfinder: Aigner, Michael, 4223 Katzdorf (AT); Mayrbäurl, Erwin, 4481 Asten (AT); Miethlinger, Jürgen, 4851 Gampern (AT)
(74) Vertreter: Hoefer & Partner Patentanwälte mbB

(56) Entgegenhaltungen:
- WO-A1-91/08425
- DE-A1- 4 115 710
- DE-A1-102006 035 531
- GB-A- 2 452 927

## Beschreibung

Die Erfindung bezieht sich auf eine Gebäude-Be- und Entlüftungsvorrichtung gemäß den Merkmalen des Oberbegriffs des Anspruches 1.

Im Einzelnen bezieht sich die Erfindung auf eine Vorrichtung zum Be- und Entlüften von Wohnräumen oder gewerblich genutzten Räumen und welche insbesondere bei Gebäudesanierungen einsetzbar ist.

Im Einzelnen umfasst die erfindungsgemäße Vorrichtung dabei ein in eine Mauer einsetzbares Montagerohr, in welchem lösbar ein rohrförmiges Gehäuse montiert ist. In dem Gehäuse ist ein elektrisch zu betreibender Lüfter angeordnet, um Raumluft nach außen zu blasen oder um Außenluft in den Innenraum des Gebäudes einzusaugen. In dem freien Querschnitt des rohrförmigen Gehäuses ist zumindest ein Wärmespeicherelement angeordnet.

Derartige Vorrichtungen sind aus dem Stand der Technik bekannt. Dabei wird beim Ausblasen der Raumluft durch diese das zumindest ein Wärmespeicherelement erwärmt, so dass zumindest ein Teil der Energie der Raumluft gespeichert bleibt. Bei einem nachfolgenden Einblasen von kälterer Außenluft wird diese durch die Durchströmung des Wärmespeicherelements erwärmt. Es versteht sich, dass die erfindungsgemäße Vorrichtung auch bei einem kühleren Innenraum und einer wärmeren Außenluft entsprechend einsetzbar ist.

Aus der DE 299 04 161 U1 ist ein Gerät zur Be- und Entlüftung von Räumen mit einem regenerativen Wärmetauscher bekannt, bei welchem an einer Gebäudeinnenwand ein Lüfter angeordnet ist, durch welchen Luft durch eine kanalförmige Ausnehmung in einer Gebäudewand ausgeblasen oder eingesaugt werden kann. In der kanalförmigen Öffnung sind mehrere regenerative Wärmespeicher angeordnet. Bei dem Gerät erweist es sich als nachteilig, dass die Wärmespeicher nicht oder nur nach erheblichem Montageaufwand zugänglich sind und somit nur schwer zu reinigen sind. Weiterhin ist der innenliegende Lüfter aus Gründen der Geräuschemission sowie aus optischen Gründen und Installationsgründen nachteilig.

Die DE 41 04 423 A1 zeigt eine Entlüftungs- und Belüftungsanlage mit einem Wärmespeicher, bei welcher ebenfalls ein innenliegender Ventilator vorgesehen ist. Die gesamte Anordnung ist zur Reinigung oder Überprüfung demontierbar. Jedoch erweisen sich hierbei sowohl die Gesamtmontage als auch die Reinigungsarbeiten und die Optik als nachteilig. Der innenliegende Lüfter erzeugt zudem erhebliche Geräusche.

Aus der DE 93 01 812 U1 ist eine Entlüftungs- und Belüftungsanlage mit einem Wärmespeicher bekannt, bei welcher ein rohrartiges Gehäuse in einer Mauer montiert ist. In dieses Gehäuse wird eine durchströmbare Einheit der Entlüftungs- und Belüftungsanlage eingeschoben. In der Einheit sind plattenförmige Wärmespeicher vorgesehen, zwischen denen ein zwischen Rechtslauf und Linkslauf umschaltbarer Ventilator angeordnet ist. Die Einheit ist aus dem Gehäuse entnehmbar und weist eine kastenartige, an einer Seite offene Konstruktion auf, so dass die Wärmespeicherelemente sich von oben in einfacher Weise einsetzen lassen.

Die WO 1994/008182 A1 zeigt eine Vorrichtung zum Be- und/oder Entlüften von Räumen, bei welcher in ein Mauerwerk ein Gehäuse eingesetzt ist, in welches von der Rauminnenseite aus ein auswechselbarer Einsatz als Kartusche einschiebbar ist. Dabei sind elektrische Kontakte vorgesehen, die eine Kontaktierung zwischen dem Gehäuse und dem Einsatz sicherstellen.

Eine ähnliche Konstruktion einer Luftaustausch- und/oder Entfeuchtungseinrichtung zeigt die DE 41 15 710 A1. Dabei sind die einzelnen Komponenten (Lüfter, Wärmespeicher, etc.) in einem rohrförmigen Gehäuse angeordnet. Eine ähnliche Konstruktion mit einem schallabsorbierenden Gehäusematerial zeigt auch die EP 0 990 859 A2. Eine weitere modulare Ausgestaltung ist aus der DE 10 2006 035 531 A1 vorbekannt.

Weiterhin ist es aus dem Stand der Technik nachteilig, dass die vom Lüfter oder Ventilator erzeugten Volumenströme im Zuluft- bzw. Abluftbetrieb unterschiedlich sind und dass durch die Kondensatbildung insbesondere im Winter eine erhebliche Vereisungsgefahr besteht.

Hinsichtlich der Reinigung ist es nachteilig, dass diese nur durch qualifiziertes Fachpersonal möglich ist und somit kostenintensiv ist. Hieraus resultieren relativ lange Wartungsintervalle, welche wiederum zu einer negativen Beeinflussung des Raumklimas führen.

Nachteilig erweist es sich beim Stand der Technik auch, dass die Be- und Entlüftungsvorrichtungen hinsichtlich ihrer Handhabung, der Dosierung der Durchströmungsmenge sowie der elektrischen Installation für die Verwendung durch einen Endverbraucher nur sehr bedingt verwendbar sind.

Der Erfindung liegt die Aufgabe zugrunde, ein Gebäude-Be- und Entlüftungsvorrichtung der eingangs genannten Art zu schaffen, welche unter Vermeidung der Nachteile des Standes der Technik bei einfachem Aufbau und einfacher Montierbarkeit insbesondere bei der Sanierung von Gebäuden einsetzbar ist und in einfacher Weise gewartet bzw. gereinigt werden kann.

Erfindungsgemäß wird die Aufgabe durch die Merkmalskombination des Anspruchs 1 gelöst, die Unteransprüche zeigen weitere vorteilhafte Ausgestaltungen der Erfindung.

Die erfindungsgemäße Vorrichtung weist somit einen rohrförmigen Aufbau auf und kann mit einer nachträglichen Bohrung in einer Außenmauer eines Gehäuses einfach eingebaut werden.

Hierzu wird das Montagerohr in die Öffnung der Mauer einsetzt. In dem Montagerohr ist ein rohrförmiges Gehäuse angeordnet, welches demontierbar ist. In dem Gehäuse befindet sich in Axialrichtung zwischen den Wärmespeicherelementen der Lüfter. Dieser ist somit hinsichtlich der Geräuschentwicklung und hinsichtlich der Temperaturbeaufschlagung zwischen Wärmespeicherelementen geschützt angeordnet. Das Gehäuse selbst ist so ausgebildet, dass es einen Installationsbereich umfasst, in welchem elektrische Anschlüsse zumindest für den Lüfter angebracht sind. Der Installationsbereich ist bevorzugterweise mit einem von diesem zu lösenden Zugangsbereich, beispielsweise einem Deckel oder einer zylindrischen Halbschale abgedeckt, so dass sich insgesamt eine rohrförmige Ausgestaltung des Gehäuses ergibt. Dabei ist erfindungsgemäß vorgesehen, dass zwischen dem Installationsbereich und dem Montagerohr zumindest eine elektrische Kontaktverbindung zur automatischen Verbindung und Lösung der elektrischen Anschlüsse bei Entnahme und Einsetzen des Gehäuses aus dem und in das Montagerohr vorgesehen ist.

Erfindungsgemäß ist somit die Möglichkeit geschaffen worden, durch einfachste Bedienung die erfindungsgemäße Be- und Entlüftungsvorrichtung entweder gänzlich zu verschließen oder für einen nicht durch den Lüfter hervorgerufenen Luftdurchzug teilweise zu verschließen.

Die erfindungsgemäß vorgesehene Kontaktierung der elektrischen Verbindung des Lüfters gestattet es, diesen in einfachster Weise von der Stromversorgung abzukoppeln und somit zum einen die Be- und Entlüftungsvorrichtung einfach reinigen zu können und zum anderen bei einem vollständigen oder teilweisen Verschluss eine Inbetriebnahme des Lüfters zu verhindern.

Das Öffnen und Schließen der erfindungsgemäßen Vorrichtung erfolgt somit in einfachster Weise durch eine Relativverdrehung des Anschlagelements und des Verschlusselements, so dass die in den beiden Elementen vorgesehenen Öffnungen entweder fluchtend zueinander angeordnet sind oder den Strömungsquerschnitt ganz oder teilweise verschließen. Hierdurch kann die erfindungsgemäße Vorrichtung zu einer außenliegenden Seite des Montagerohrs abgedichtet werden. Außenliegend und Innenliegend im Sinne der Erfindung bezieht sich auf eine Wand, in der die erfindungsgemäße Vorrichtung eingebaut ist, wobei Außenliegend zur Außenseite der Wand hinweisend bedeutet, während Innenliegend bedeutet, dass diese Seite der erfindungsgemäßen Vorrichtung zum Innenraum hin orientiert ist.

Erfindungsgemäß bedeutet Axialrichtung die Richtung längs einer zentrischen, axialen Achse, um welche das Gehäuse relativ zu dem Montagerohr drehbar ist. Diese zentrische Axialachse umfasst auch die Drehachse des Lüfters.

Die Funktionsweise der erfindungsgemäßen Vorrichtung ist so ausgebildet, dass diese nach dem sogenannten Regeneratorprinzip arbeitet. Damit wird beispielsweise Raumluft durch den Lüfter durch eines oder mehrere Wärmespeicherelemente nach außen transportiert. Die Wärmespeicherelemente werden dabei erwärmt. Anschließend wird die Betriebsrichtung des Lüfters oder Ventilators gewechselt, so dass kalte Außenluft nach Innen durch die Wärmespeicher hindurch transportiert und dabei erwärmt wird. Es versteht sich, dass die erfindungsgemäße Vorrichtung auch dann einsetzbar ist, wenn die Umgebungsluft eine höhere Temperatur aufweist als die Raumtemperatur, beispielsweise bei klimatisierten Räumen.

Durch den erfindungsgemäß beschriebenen Regeneratorbetrieb ist es möglich, die Raumfeuchte konstant zu halten und damit ein Austrocknen der Raumluft zu verhindern. Dies ist dadurch gewährleistet, dass die überschüssige Raumfeuchte der Raumluft im äußeren Wärmespeicher gespeichert wird oder zu Wasser kondensiert und von der einströmenden kalten, eine geringere Feuchtigkeit enthaltenden Luft wieder aufgenommen wird. Hierdurch kann erfindungsgemäß einerseits auf eine aufwendige Ableitung von Kondensatwasser verzichtet werden, andererseits wird das Raumklima positiv beeinflusst.

Erfindungsgemäß ist es besonders vorteilhaft, wenn zumindest ein zusätzlicher Filter vorgesehen ist, dieser kann an der Außenseite oder an der Innenseite der erfindungsgemäßen Vorrichtung angebracht sein. Derartige Filter sind beispielsweise gegen Ungeziefer, Staub, Pollen oder Ähnlichem wirksam. Diesbezüglich kann auf den Stand der Technik verwiesen werden.

Erfindungsgemäß ist es jedoch auch möglich, Kombinationen derartiger Filter zu verwenden.

Weiterhin kann es erfindungsgemäß günstig sein, wenn an der Außenseite oder der Innenseite der erfindungsgemäßen Vorrichtung Abdeckkappen, Gitter, Abdeckelemente oder Ähnliches vorgesehen sind. Diese verhindern das Eindringen von beispielsweise Regenwasser oder Blättern und schützen somit an der Außenseite vor Witterungseinflüssen. Zusätzlich können sie optische Aufgaben übernehmen und/oder die Strömungsverhältnisse günstig beeinflussen.

Im Folgenden wird die Erfindung anhand eines Ausführungsbeispiels in Verbindung mit der Zeichnung beschrieben. Dabei zeigt:
- Fig. 1: eine schematische Axial-Schnittansicht einer erfindungsgemäßen Gebäude-Be- und Entlüftungsvorrichtung,
- Fig. 2: eine vergrößerte Detailansicht gemäß Einzelheit B von Fig. 1,
- Fig. 3: eine vergrößerte Einzelansicht gemäß Einzelheit E von Fig. 1,
- Fig. 4: eine stirnseitige Ansicht auf das Gehäuse mit Blickrichtung von links gemäß Fig. 1,
- Fig. 5: eine Seitenansicht eines erfindungsgemäßen Verschlussrings,
- Fig. 6: eine perspektivische Schnittansicht der erfindungsgemäßen Vorrichtung,
- Fig. 7 und 8: perspektivische Darstellungen im funktionsbereiten sowie im um 90° gedrehten, teilweise entnommenen Zustand,
- Fig. 9 und 10: Einzelheiten A und C gemäß Fig. 8,
- Fig. 11: eine weitere perspektivische Ansicht im um 90° gedrehter Entnahmeposition mit Darstellung einer Befestigungsnase, und
- Fig. 12: eine Einzelheit G gemäß Fig. 11.

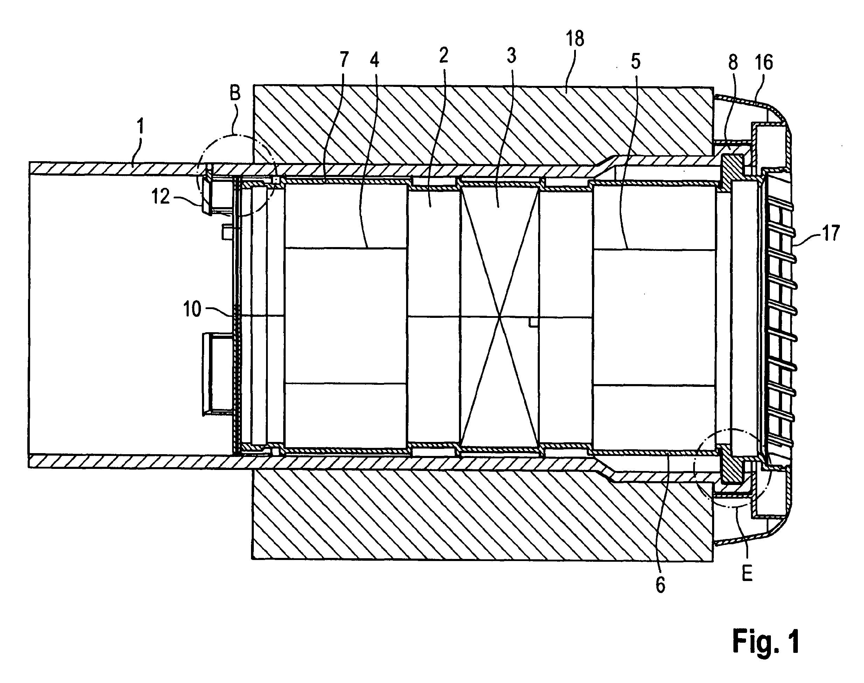

Die erfindungsgemäße Vorrichtung umfasst (siehe Fig. 1) ein Montagerohr 1, in welches ein rohrförmiges Gehäuse 2 eingesetzt ist. In einem mittleren Bereich des Gehäuses 2 ist ein Lüfter 3 angeordnet, seitlich zu dem Lüfter 3 sind Wärmespeicherelemente 4 und 5 vorgesehen. Das Gehäuse 2 weist eine untere Teilschale auf, welche einen Installationsbereich 6 bildet, sowie eine obere halbzylindrische Teilschale, welche abgenommen oder abgeschwenkt werden kann und einen Zugangsbereich 7 bildet.

Der Lüfter 3 ist so ausgebildet, dass er seine Drehrichtung ändern kann und somit die Strömungsrichtung variiert werden kann.

Das rohrförmige Montagerohr 1 kann in eine Bohrung einer Wand eines Gebäudes eingebracht werden. Die rohrförmige Ausgestaltung hat den Vorteil, dass derartige Bohrungen einfach herstellbar sind. Das Montagerohr 1 kann als Muffenrohr mit einer Sicke 8 ausgebildet sein und diese kann zur Befestigung des Gehäuses 2 dienen. Außenliegend im Sinne der Beschreibung der Erfindung bedeutet somit zur Außenseite eines Gebäudes weisend, Innenliegend bedeutet zum Innenraum des Gebäudes hinweisend. Es versteht sich, dass die erfindungsgemäße Vorrichtung auch in analoger Weise in Zwischenwänden eines Gebäudes vorgesehen sein kann.

Das Montagerohr ist bevorzugterweise ein Kunststoffrohr, welches mittels Coextrusion mehrschichtig aufgebaut sein kann. Ein derartiger mehrschichtiger Rohraufbau erlaubt die Kombination unterschiedlicher Materialien, es ist jedoch auch möglich, gleiche Materialien mit unterschiedlichen Additiven zu verwenden.

Besonders günstig ist es, wenn das Montagerohr 1 eine Innenschicht aufweist, welche mit antimikrobiellen Additiven ausgerüstet ist, um das Wachstum von Bakterien einzudämmen. Die Innenschicht kann beispielsweise dünn durch Coextrusion aufgebracht werden.

Weiterhin kann es günstig sein, die Mittelschicht des Montagerohrs so auszubilden, dass diese gute Isolationseigenschaften aufweist, um eine Ableitung von Wärme in das Mauerwerk zu verhindern. Dies kann beispielsweise durch eine geschäumte Mittelschicht erfolgen.

Eine Mittelschicht des Montagerohrs kann auch mit einem hohen Anteil an mineralischen Verstärkungsstoffen, wie Talkum, Kreide oder Bariumsulfat versehen sein, um zu einer Verstärkung zu führen. Neben einer höheren Festigkeit wird durch die höhere Masse bei dieser bevorzugten Ausgestaltungsvariante das Schallabsorptionsvermögen des Montagerohrs 1 erhöht, so dass zusätzlich die Geräusche des Lüfters oder Geräusche von der Außenseite eines Gebäudes absorbiert werden und nicht in das Mauerwerk oder in den Innenraum übertragen werden.

Erfindungsgemäß ist somit zumindest jeweils ein Wärmespeicherelement 4, 5 beidseitig des Lüfters 3 vorgesehen. Hierdurch wird eine optimale Wärmespeicherung und Wärmerückgewinnung gewährleistet. Weiterhin ergibt sich eine besonders gute Schalldämmung des Lüfters 3. Der Lüfter ist somit vom Innenraum des Gebäudes ausreichend entkoppelt und entfernt. Durch die mittige Lage des Lüfters 3 ist die Gefahr einer Vereisung durch Kondensatbildung bei negativen Außentemperaturen vermieden. Hierbei wird insbesondere ein erhöhter Stromverbrauch vermieden. Auch Eisansätze an den Lüfterflügeln werden verhindert.

Durch die Verringerung der Kondensatbildung an dem innenliegenden, im Wesentlichen mittig angeordneten Lüfter werden auch Korrosionserscheinungen minimiert, so dass sich eine lange Lebensdauer des Lüfters 3 ergibt.

Ein weiterer, wesentlicher Vorteil der erfindungsgemäßen Ausgestaltung liegt darin, dass durch die Positionierung des Lüfters zwischen den beiden Wärmespeicherelementen 4, 5, welche bevorzugterweise gleich ausgebildet sind, ein gleicher Druckverlust durch die Wärmespeicherelemente 4, 5 jeweils im Saug- und im Druckbereich des Lüfters 3 ergibt. Es versteht sich, dass es erfindungsgemäß jedoch auch möglich ist, die Wärmespeicherelemente 4, 5 unterschiedlich auszubilden, um unterschiedliche Druckverluste im Saugbereich oder Druckbereich zu schaffen. Dies kann durch unterschiedliche axiale Länge der Wärmespeicherelemente 4, 5 oder durch unterschiedliche Strömungsquerschnitte in den Wärmespeicherelementen 4, 5 erreicht werden.

Erfindungsgemäß zu verwendende Wärmespeicherelemente sind aus dem Stand der Technik bekannt, beispielsweise aus der DE 299 16 493 U1.

Die Materialien der Wärmespeicherelemente 4, 5 können auch unterschiedliche Speichermaterialen aufweisen, so dass eine Kombination zweier oder mehrerer unterschiedlicher Speicher einer erfindungsgemäßen Vorrichtung vorgesehen sein kann.

Die generellen Anforderungen an die erfindungsgemäß zu verwendenden Wärmespeichermaterialen umfassen eine gute Wärmeleitfähigkeit, eine hohe Oberfläche zum Wärmeübertrag, eine hohe Dichte und eine hohe spezifische Wärmekapazität hinsichtlich des Speichervermögens.

Erfindungsgemäß kann es besonders günstig sein, das innenliegende Wärmespeicherelement 5 aus zwei voneinander getrennten Speichern auszubilden. Gleiches gilt für das außenliegende Wärmespeicherelement 4. Somit kann der jeweilige Druckwiderstand entsprechend angepasst werden, ebenso die Filterwirkung und die Strömungsrichtung bzw. Einbaulage.

Erfindungsgemäß können insbesondere klassische Wärmespeicher mit Latentspeichern bzw. Phasenwechselmaterialien kombiniert werden. Durch einen Latentspeicher ist es möglich, eine relativ konstante Temperatur zu halten, während andere Speichermaterialien Temperaturschwankungen besser aufnehmen können. Bei Latentspeichern wird der Wärmeinhalt während eines Phasenübergangs genutzt. Vorteilhafterweise werden Latentspeichermaterialien eingesetzt, die einen Phasenübergang im relativen Temperaturbereich, beispielsweise zwischen 0° und 30°C haben. Somit kann eine optimale Speicherkombination geschaffen werden.

Erfindungsgemäß ist es möglich, die Wärmespeicherelemente aus Metallen zu fertigen. Hinsichtlich guter Wärmeleitfähigkeit werden bevorzugt metallische Werkstoffe wie Aluminium, Kupfer, Bronze und Messing einsetzt.

Es ist erfindungsgemäß jedoch auch möglich, Kunststoffe mit entsprechenden Wärmespeichern und Additiven zu versehen, um hieraus die Wärmespeicherelemente 4, 5 zu fertigen.

Erfindungsgemäß ist es auch möglich, Steine oder Steinmaterial zu verwenden, beispielsweise offenporige Gesteine oder an der Oberfläche geschlossene Gesteine. Weiterhin können keramische Werkstoffe, welche offenporig oder geschlossenporig hergestellt sind, erfindungsgemäß besonders vorteilhaft eingesetzt werden.

Die erfindungsgemäße Vorrichtung gestattet es, die Wärmespeicherelemente 4, 5 hinsichtlich ihrer Geometrie den jeweiligen Gegebenheiten anzupassen. Somit kann in das Gehäuse 2 ein jeweils für den Einbauort optimiertes Wärmespeicherelement eingesetzt werden, ohne dass weitere Änderungen des Gehäuses erforderlich sind.

Die Materialien der Wärmespeicherelemente 4, 5 können pulverförmig, feinkörnig, grobkörnig oder in anderer Weise ausgebildet sein. Es ist jede mechanische Bearbeitung zur Schaffung der Geometrien möglich. Weiterhin können unterschiedliche Teile miteinander verklebt, verschweißt, verlötet oder anderweitig verbunden werden. Die Materialien können auch in Faserform vorliegen, beispielsweise als Vlies, Gewebe, Gestrick oder Gewirk, um zu den Wärmespeicherelementen 4, 5 verarbeitet zu werden.

Der erfindungsgemäße Lüfter 3 ist erfindungsgemäß so ausgebildet, dass er seine Drehrichtung ändern kann, um die Luftströmung in beiden Richtungen zu fördern.

Hinsichtlich der Betriebszyklen ist es möglich, eine zeitgesteuerte Regelung oder eine Temperaturregelung oder Steuerung vorzusehen. Dabei ist es möglich, mittels Sensoren die Temperaturen der Wärmespeicherelemente 4, 5 zu messen und bei der Gestaltung des optimalen Betriebszyklus zu berücksichtigen.

Die erfindungsgemäße Regelung oder Steuerung kann auch Jahreszeiten oder Tageszeiten berücksichtigen, beispielsweise um einen erhöhten Wärmeverlust zu vermeiden oder um die Vereisung oder Kondensatbildung zu minimieren. Hierzu ist die Steuerung oder Regelung auch mit einem Außentemperatursensor koppelbar.

Der erfindungsgemäße Aufbau der Vorrichtung gestattet es, sowohl eine einfache Montage in einer Bohrung eines Mauerwerks vorzunehmen, als auch eine einfache Instandhaltung oder Wartung zu gewährleisten. Dabei ist es besonders vorteilhaft, dass das Gehäuse 2 einfach und ohne Spezialwerkzeug montiert oder demontiert werden kann. Spezielle Fachkenntnisse sind hierfür nicht erforderlich.

Die Demontage des Gehäuses 2 und damit des Lüfters 3 und der Wärmespeicherelemente 4, 5 erfolgt bevorzugterweise zur Gebäudeinnenseite hin. Somit ist es möglich, das Gehäuse in einfacher Weise aus dem Montagerohr herauszuziehen.

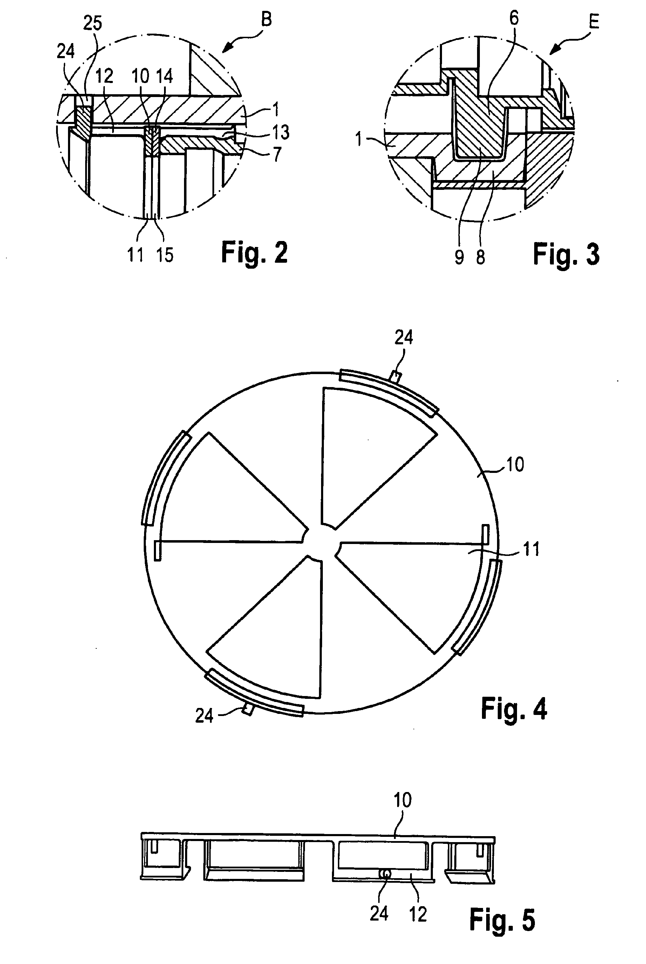

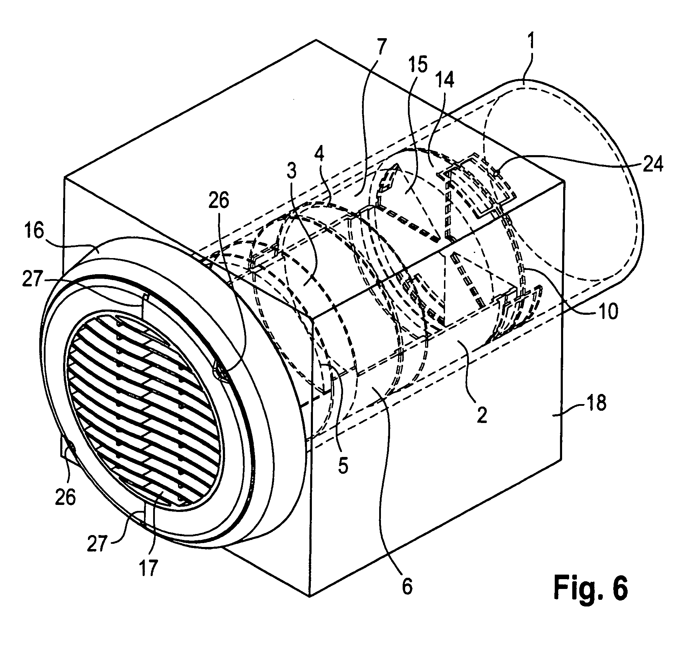

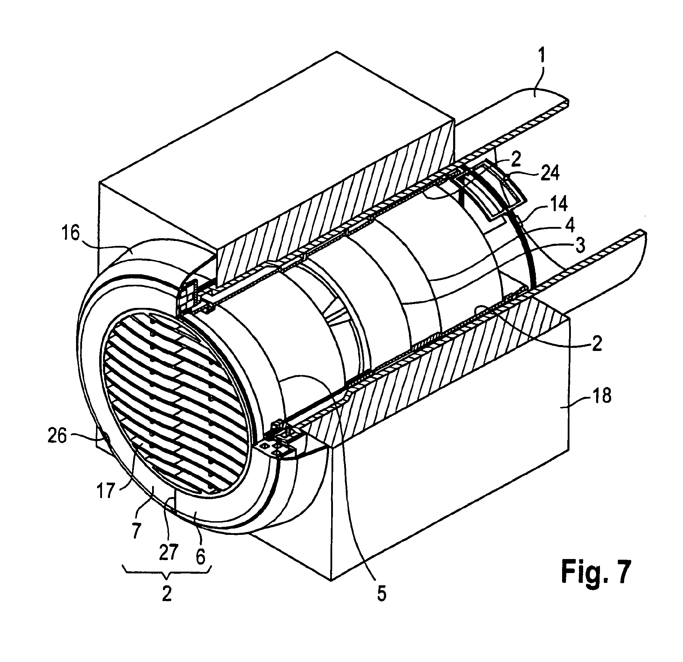

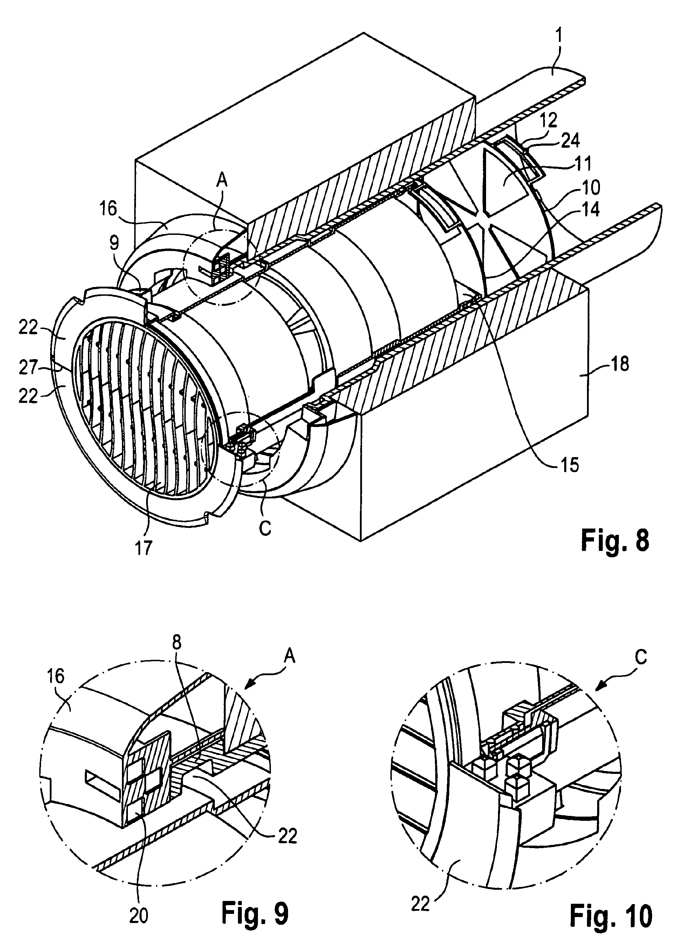

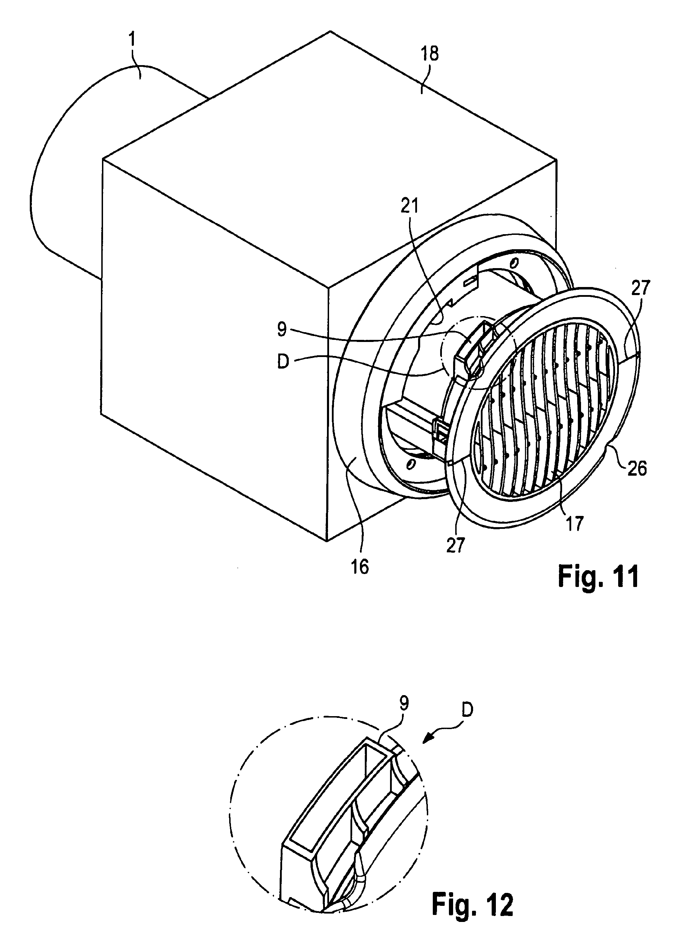

Um eine Verriegelung des Gehäuses 2 in dem Montagerohr zu erreichen, ist bevorzugterweise eine Bajonettverriegelung vorgesehen, die beispielsweise den Sickenbereich des Montagerohres nutzen kann. Durch eine Verdrehung des Gehäuses 2 um die Längsachse (zentrische Axialachse) kann dieses somit in einfacher Weise verrastet werden. Hierzu sind bei dem gezeigten Ausführungsbeispiel an dem Gehäuse 2 zwei Befestigungsnasen 9 ausgebildet (siehe Fig. 3), die segmentartig mit segmentartigen Ausnehmungen 21 der Sicke 8 zusammenwirken. Die Fig. 11 und 12 zeigen in etwas abgewandelter Ausführungsform im Detail die Bajonettkonstruktion. Dabei ist ersichtlich, dass in dem Gehäuse 2 die Befestigungsnasen 9 ausgebildet sind, welche mit den segmentartigen Ausnehmungen 21 der kreisförmigen Sicke 8 zusammenwirken, um das Gehäuse 2 in das Montagerohr 1 einzuschieben. Durch eine Drehung erfolgt ein Verschieben der Befestigungsnasen 9 in Umfangsrichtung längs einer Nut 22 der Sicke 8 (siehe auch Fig. 9). Im elektrisch kontaktierten, betriebsfertig eingesetzten Zustand des Gebäudes 2 sind Lamellen einer Innenabdeckung 17 horizontal angeordnet, so wie dies in den Fig. 6 und 7 gezeigt ist. In der Entnahmeposition zum Lösen der Bajonettverbindung wird das Gehäuse relativ zu dem Montagerohr um 90° gedreht, so dass die Lamellen der Innenabdeckung 17 vertikal stehen (siehe Fig. 8 und 11). Durch die Ausrichtung der Lamellen der Innenabdeckung 17 ist es für den Benutzer einfach zu erkennen, ob sich die erfindungsgemäße Vorrichtung im vollständig eingebauten, betriebsbereiten Zustand befindet.

Um eine axial korrekte Montage des Gehäuses 2 in dem Montagerohr 1 sicherzustellen, und um, wie nachfolgend zu beschreiben ist, einen Verschluss der Durchströmungsöffnung zu ermöglichen, ist in dem Montagerohr 1 ein Anschlagelement 10 angeordnet. Dieses ist mit segmentierten Ausnehmungen 11 1 versehen (siehe beispielsweise die stirnseitige Ansicht gemäß Fig. 4). Es ist somit eine senkrecht auf die Längsachse (zentrische Axialachse) angeordnete Wand mittels des Anschlagelements 10 ausgebildet, welche mit Ausnehmungen 11 versehen ist. Das Anschlagelement 10 wird über Haltebügel 12 an dem Montagerohr gehalten und mittels Zapfen 24 drehfest und axialfest gehalten. Die Zapfen 24 greifen in Löcher 25 des Montagerohrs 1 (siehe beispielsweise Fig. 2). Somit ist das Anschlagelement 10 drehfest in dem Montagerohr 1 angeordnet. Bei einer Entnahme des Gehäuses 2 verbleibt das Anschlagelement 10 in dem Montagerohr.

Um einen dichtenden Verschluss zu gewährleisten und um thermische Ausdehnungen in Axialrichtung zu ermöglichen, sind die Zapfen 24 an dem elastisch ausgebildeten Haltebügel 12 vorgesehen. Durch die Elastizität des Haltebügels 12 kann somit eine Kompensation von thermischen Ausdehnungen in Axialrichtung erfolgen, ohne dass die dichtende Anlage zwischen dem Anschlagelement 10 und einem Verschlusselement 14 (siehe nachfolgend) beeinträchtigt würde.

Die Zapfen 24 sind somit in die Löcher 25 einclipsbar, um das Anschlagelement 10 zu montieren.

Mittels Schnapphaken 13 ist das Gehäuse 2 mit dem Verschlusselement 14 koppelbar, welches somit fest mit dem Gehäuse 2 verbunden ist und zusammen mit diesem bei der Demontage aus dem Montagerohr 1 entnehmbar ist. Das Verschlusselement 14 weist ebenfalls segmentierte Ausnehmungen 15 gleicher Ausgestaltung wie das Anschlagelement 14 auf. Durch eine Verdrehung des rohrförmigen Gehäuses 2 zusammen mit dem Verschlusselement 14 können somit die Ausnehmungen 11 und 15 miteinander fluchtend ausgerichtet werden. Somit ist eine Freigabe eines Durchströmungskanals sichergestellt. Abhängig von der Segmentierung der Ausnehmungen 11 in dem Anschlagelement 10 bzw. der Ausnehmungen 15 in dem Verschlusselement 14 kann somit ein vollständiges Öffnen oder ein vollständiges Schließen erfolgen. Die Figuren, insbesondere Fig. 4, zeigen eine Ausgestaltungsvariante, bei welcher durch eine Drehung um 45° ein vollständiger Verschluss möglich ist. Da das Anschlagelement 10 und das Verschlusselement 14, insbesondere bedingt durch die Elastizität der Haltebügel 12, auf Druck gegeneinander liegen, erfolgt ein zuverlässiger Verschluss des Strömungsquerschnittes. Dies ist insbesondere bei starkem Wind oder sehr ungünstigen Außentemperaturen wünschenswert. Eine Drehung um einen Winkelbetrag kleiner als 45° führt zu einem teilweisen Verschluss.

Bereits bei einer geringfügigen Drehung erfolgt ein Öffnen der elektrischen Kontaktierung (siehe nachfolgend), so dass der Lüfter nicht mehr funktionsfähig ist. Dies ist ein wesentliches Sicherheitsmerkmal. Da sich weiterhin der Bajonettverschluss erst bei einer Drehung um 90° öffnet, bleibt das Gehäuse 2 auch bei geschlossenem Strömungsquerschnitt (45° verdreht) fest in dem Montagerohr 1 gehalten. Bei einer Teilöffnung durch eine Drehung um weniger als 45° (bezogen auf das in Fig. 4 gezeigte Ausführungsbeispiel) kann somit eine Belüftung durch Konvektion erfolgen, ohne den Lüfter zu nutzen.

Eine manuelle Drehung des Gehäuses 2 wird durch Griffausnehmungen 26 an der Innenabdeckung 17 erleichtert.

Durch das Zusammenwirken des Verschlusselements 14 und des Anschlagelements 10 ist es somit möglich, die freie Durchströmfläche zu verändern, so dass die Be- und Entlüftungsvorrichtung auch in einen gänzlich geschlossenen Zustand überführt werden kann. Dabei ist es möglich, durch eine mehrteilige Ausgestaltung entweder des Verschlusselements 14 oder des Anschlagelements 10 unterschiedliche Zwischenstufen, gegebenenfalls durch Verwendung weiterer Zwischenelemente zu realisieren, so dass bei Überschreitung von Winkellagen von beispielsweise 15° und 30° eine stufenweise Verengung oder Erweiterung des Querschnitts möglich ist. Bei einer weiteren Winkellage, beispielsweise 75°, ist beispielsweise eine weitere Zwischenstellung oder Endstellung möglich.

Erfindungsgemäß ist es weiterhin möglich, Bauteiltoleranzen, beispielsweise durch unterschiedliche Wärmedehnungen oder durch Fertigungsungenauigkeiten im geschlossenen Zustand der Vorrichtung auszugleichen, um durch ein Zusammenschieben des Verschlusselements 14 und des Anschlagelements 10 unkontrollierte Luftströmungen, Undichtigkeiten oder Ähnliches auszuschließen oder zu vermindern.

Die Anzahl und Ausgestaltung der Ausnehmungen 11 und 15 kann beliebig gewählt werden, so dass beispielsweise in einer vorgegebenen Stellung der halbe zur Verfügung stehende Querschnitt als Strömungsquerschnitt freigegeben ist. Durch eine Verdrehung kann dieser Querschnitt vollständig geschlossen werden, so dass keine Luftzufuhr durch die erfindungsgemäße Vorrichtung erfolgen kann. Dies ist beispielsweise bei stürmischen Wetterlagen von besonderem Vorteil. Durch geeignete Verdrehung lassen sich auch Zwischenwerte einstellen, so dass der Strömungsquerschnitt beliebig vergrößert oder verkleinert werden kann. Bei dem gezeigten Ausführungsbeispiel sind vier Ausnehmungen 11 bzw. 15 vorgesehen. Somit ist durch eine Drehung um 45° der Lüftungsquerschnitt entweder freigegeben oder verschlossen, so wie obenstehend erläutert.

Wie bereits erläutert, ist es erfindungsgemäß besonders vorteilhaft, dass in dem Installationsbereich elektrische Kontaktverbindungen vorgesehen sind, welche somit zwischen dem Gehäuse 2 und dem Montagerohr 1 wirken. Dabei kann die erfindungsgemäße Vorrichtung so ausgebildet sein, dass in einer Demontageposition, in welcher das Gehäuse 2 aus dem Montagerohr 1 entnommen werden kann, die Kontaktverbindungen stromlos sind, so dass das Gehäuse 2 mit dem Lüfter 3 in sicherer Weise entnommen werden kann. Durch eine entsprechende Verdrehung, beispielsweise um 45°, erfolgt eine elektrische Kontaktierung, so dass der Lüfter 3 arbeiten kann. Durch zugeordnete weitere Verdrehmöglichkeiten ist es dann möglich, den Strömungsquerschnitt durch Zusammenwirken des Anschlagelements 10 und des Verschlusselements 14 zu öffnen bzw. zu schließen.

Erfindungsgemäß müssen somit keine zusätzlichen Kabel geklemmt werden. Auch der gesamte elektrische Installationsaufwand ist niedrig, da lediglich eine elektrische Installation des Montagerohrs erfolgen muss, nicht jedoch der durch das rohrförmige Gehäuse 2 gebildeten Gesamteinheit, welche den Lüfter 3 sowie die Wärmespeicherelemente 4, 5 umfasst. Die elektrische Stromversorgung kann beispielsweise über einen Blendrahmen 16 erfolgen.

Somit kann das gesamte rohrförmige Gehäuse 2 in einfacher Weise demontiert werden, um dieses zu reinigen. Dabei können die Wärmespeicherelemente 4, 5 durch die mehrteilige Ausgestaltung des rohrförmigen Gehäuses 2 nach Öffnen des Zugangsbereichs 7 aus dem Installationsbereich 6 entnommen werden. Hierfür sind keinerlei Werkzeuge oder Fachkenntnisse erforderlich, da die Wärmespeicherelemente 4, 5 lediglich eingelegt sind. Diese können in einfacher Weise nach ihrer Entnahme gereinigt werden, beispielsweise unter fließendem Wasser oder auch in einem Geschirrspüler. Durch diese Reinigungsmöglichkeit ist es möglich, auf zusätzliche Filter oder Ähnliches zu verzichten, da die Wärmespeicherelemente 4, 5 einfach und zuverlässig zu reinigen sind.

Besonders günstig kann es sein, wenn erfindungsgemäß ein Photovoltaikmodul zur Energieversorgung verwendet wird. Dieses kann beispielsweise am Außenbereich des Montagerohrs 1 vorgesehen sein. Somit ist keine externe Stromversorgung erforderlich.

Die Drehung des rohrförmigen Gehäuses 2 erfolgt vorzugsweise manuell, mittels Griffmulden (Griffausnehmungen 26) und einer Positionsmarkierung ist die Handhabung vereinfacht. Es ist jedoch auch möglich, einen Stellmotor vorzusehen, der beispielsweise mit einem Windsensor oder einem Temperatursensor gekoppelt ist.

Die Innenabdeckung 17 ist hinsichtlich optischer Anforderungen sowie hinsichtlich des Luftvolumenstroms ausgestaltet. Weiterhin kann sie zusätzlich eine Klappenregelung mit Luftklappen umfassen, die beispielsweise im oberen und im unteren Bereich vorgesehen sind und jeweils zu einer strömungsgünstigen Verteilung der Luft folgt. Zusätzlich können auch Verschlussklappen vorgesehen sein, die nach außen oder nach innen schwenken können und in der Gegenrichtung den Strömungsquerschnitt versperren. Somit erfolgt eine automatische Abdeckung beim Stillstand des Lüfters 3.

Die Fig. 7 und 8 zeigen jeweils eine perspektivische Darstellung eines Ausführungsbeispiels der erfindungsgemäßen Vorrichtung im eingeschobenen, betriebsbereiten Zustand (Fig. 7) sowie im teilweise entnommenen Zustand (Fig. 8). Die Fig. 9 und 10 zeigen jeweils Einzelheiten A und C, welche die elektrische Kontaktierung für die Stromversorgung des Lüfters 3 beispielhaft erläutern. Dabei ist der ringförmige Rahmen der Innenabdeckung 17 zweigeteilt und umfasst drei Kontaktstifte 19, welche mit zugehörigen Kontaktbuchsen 20 des Blendrahmens 16 in Kontakt bringbar sind, wobei die Kontaktierung durch eine Drehbewegung erfolgen kann.

Die Fig. 11 und 12 zeigen eine weitere Ausgestaltungsvariante mit einer Befestigungsnase 21, welche in eine Ringnut des Blendrahmens 16 bajonettverschlussartig einrastbar ist.

Die erfindungsgemäße Vorrichtung kann weiterhin mit Brandschutzeinrichtungen versehen sein, beispielsweise im Bereich des beschriebenen Klappensystems oder der beschriebenen Wärmedämmung, um ein Eindringen von Luft bei einem Brand zu verhindern. Weiterhin ist es auch möglich, Blähgraphit einzuarbeiten, welcher bei einer Überschreitung einer vorgegebenen Temperatur den kanalförmigen Querschnitt der erfindungsgemäßen Vorrichtung verschließt.

### Bezugszeichenliste

- 1: Montagerohr
- 2: Rohrförmiges Gehäuse
- 3: Lüfter
- 4, 5: Wärmespeicherelement
- 6: Installationsbereich
- 7: Zugangsbereich
- 8: Sicke
- 9: Befestigungsnase
- 10: Anschlagelement
- 11: Ausnehmung
- 12: Haltebügel
- 13: Schnapphaken
- 14: Verschlusselement
- 15: Ausnehmung
- 16: Blendrahmen
- 17: Innenabdeckung
- 18: Mauer
- 19: Kontaktstifte
- 20: Kontaktbuchsen
- 21: Bajonettausnehmungen
- 22: Gehäuse
- 23: Nut
- 24: Zapfen
- 25: Loch
- 26: Griffausnehmung
- 27: Trennebene zwischen Installationsbereich 6 und Zugangsbereich 7

## Patentansprüche

1. Gebäude-Be- und Entlüftungsvorrichtung mit einem in eine Mauer (18) eines Gebäudes einsetzbaren Montagerohr (1), mit einem lösbar in dem Montagerohr (1) angeordneten, rohrförmigen Gehäuse (2), mit zumindest einem in dem Gehäuse (2) angeordneten Lüfter (3) und mit zumindest einem in dem Gehäuse (2) angeordneten Wärmespeicherelement (4, 5),
**dadurch gekennzeichnet,**
**dass** das Gehäuse (2) drehbar in dem Montagerohr (1) angeordnet ist,
**dass** in dem Montagerohr (1) zu einer außenliegenden Seite des Montagerohrs (1) angrenzend ein mit zumindest einer Ausnehmung (11) versehenes trennwandartig das Montagerohr (1) unterteilenden Anschlagelement (10) angeordnet ist,
**dass** endseitig an dem Gehäuse (2) ein mit zumindest einer Ausnehmung (15) versehenes, den Querschnitt des Gehäuses (2) trennwandartig begrenzendes Verschlusselement (14) angeordnet ist, dass das Anschlagelement (10) und das Verschlusselement (14) dichtend gegeneinander in Anlage bringbar und relativ zueinander verdrehbar sind, wobei die Ausnehmungen (11, 15) zueinander fluchtend in einer Öffnungsstellung oder zumindest teilweise gegeneinander versetzt anordenbar sind, und
**dass** an dem innenliegenden Endbereich des Montagerohrs (1) und dem innenliegenden Bereich des Gehäuses (2) zur automatischen Verbindung und Lösung von elektrischen Anschlüssen elektrische Kontaktmittel (19, 20) angeordnet sind.

2. Vorrichtung nach Anspruch 1, **dadurch gekennzeichnet, dass** das Anschlagelement (10) in Axialrichtung elastisch verschiebbar ist und/oder dass das Anschlagelement (10) und das Verschlusselement (14) plattenförmig ausgebildet und zur dichtenden Anlage gegeneinander anlegbar sind.

3. Vorrichtung nach Anspruch 1 oder 2, **dadurch gekennzeichnet, dass** das Gehäuse (2) mittels eines Bajonettverschlusses (21) in dem Montagerohr (1) in Axialrichtung fixierbar ist, und insbesondere, dass ein Rotationswinkel des Bajonettverschlusses (21) größer ist, als ein Rotationswinkel zum Öffnen und Schließen der zueinander ausgerichteten Ausnehmungen (11, 15) des Anschlagselements (10) und des Verschlusselements (14).

4. Vorrichtung nach einem der Ansprüche 1 bis 3, **dadurch gekennzeichnet, dass** zwei Wärmespeicherelemente (4, 5) vorgesehen sind und der Lüfter (3) in Axialrichtung zwischen den Wärmespeicherelementen (4, 5) angeordnet ist und/oder dass das Gehäuse (2) einen Installationsbereich (6) umfasst, wobei der Installationsbereich (6) elektrische Anschlüsse zumindest für den Lüfter umfasst und/oder dass zwischen dem Gehäuse (2) und dem Montagerohr (1) zumindest eine die Kontaktmittel (19, 20) umfassende elektrische Kontaktverbindung zur automatischen Verbindung und Lösung von elektrischen Anschlüssen bei Entnahme und Einsetzen des Gehäuses (2) aus dem und in das Montagerohr (1) vorgesehen ist.

5. Vorrichtung nach einem der Ansprüche 1 bis 4, **dadurch gekennzeichnet, dass** das Gehäuse (2) einen von dem Installationsbereich (6) zu lösenden Zugangsbereich (7) umfasst und/oder dass das Gehäuse (2) im Wesentlichen aus zwei halbzylindrischen Schalen (6, 7) ausgebildet ist.

6. Vorrichtung nach einem der Ansprüche1 bis 5, **dadurch gekennzeichnet, dass** das Gehäuse (2) vom Montagerohr (1) werkzeuglos demontierbar bzw. in dieses einsetzbar ist.

7. Vorrichtung nach einem der Ansprüche 1 bis 6, **gekennzeichnet durch** eine Steuerungsvorrichtung für den Lüfter (3), wobei insbesondere vorgesehen ist, dass die Steuerungsvorrichtung zumindest einen Temperatursensor umfasst und/oder dass die Steuerungsvorrichtung zumindest eine Zeitsteuerungsfunktion aufweist.

8. Vorrichtung nach einem der Ansprüche 1 bis 7, **gekennzeichnet durch** zumindest ein im Bereich des Montagerohrs (1) angeordnetes Filterelement.

9. Vorrichtung nach einem der Ansprüche 1 bis 8, **dadurch gekennzeichnet, dass** das Montagerohr (1) mehrschichtig ausgebildet ist und/oder dass das Montagerohr (1) zumindest eine Geräuschdämmschicht umfasst und/oder dass das Montagerohr (1) zumindest eine Isolierschicht umfasst und/oder dass das Montagerohr (1) an seiner Innenwandung mit einer antimikrobiellen Beschichtung versehen ist.

10. Vorrichtung nach einem der Ansprüche 1 bis 9, **dadurch gekennzeichnet, dass** das Gehäuse (2) im Bereich des Blendrahmens (16) eine Innenabdeckung (17) mit Strömungsleitmitteln umfasst.

## Claims

1. A building aeration and ventilation device with a mounting pipe (1) which is insertable into a wall (18) of a building, with a tubular housing (2) which is detachably arranged in the mounting pipe (1), with at least one ventilator (3) arranged in the housing (2), and with at least one heat storage element (4, 5) arranged in the housing (2),
**characterized in**
**that** the housing (2) is rotatably arranged in the mounting pipe (1),
**that** a stop element (10) which is provided with at least one recess (11) and subdivides the mounting pipe (1) in the manner of a partition wall is arranged in the mounting pipe (1), adjoining an exterior side of the mounting pipe (1),
**that** a closure element (14) which is provided with at least one recess (15) and defines the cross-section of the housing (2) in the manner of a partition wall is arranged at the end side on the housing (2), that the stop element (10) and the closure element (14) can be sealingly brought into contact with each other and are rotatable relative to each other, wherein the recesses (11, 15) can be arranged in alignment with one another in an open position or at least partly offset relative to one another, and
**that** electrical contact means (19, 20) are arranged on the interior end portion of the mounting pipe (1) and the interior portion of the housing (2) for automatically connecting and disconnecting electrical terminals.

2. The device according to claim 1, **characterized in that** the stop element (10) is elastically displaceable in axial direction and/or that the stop element (10) and the closure element (14) are configured in the form of a plate and can be placed one on the other for sealing contact.

3. The device according to claim 1 or 2, **characterized in that** the housing (2) is fixable by means of a bayonet lock (21) in the mounting pipe (1) in axial direction, and particularly that a rotation angle of the bayonet lock (21) is larger than a rotation angle for opening and closing the mutually aligned recesses (11, 15) of the stop element (10) and the closure element (14).

4. The device according to any one of claims 1 to 3, **characterized in that** two heat storage elements (4, 5) are provided and the ventilator (3) is arranged in axial direction between the heat storage elements (4, 5) and/or that the housing (2) comprises an installation area (6), wherein the installation area (6) comprises electrical terminals at least for the ventilator and/or that at least one electrical contact connection comprising the contact means (19, 20) is provided between the housing (2) and the mounting pipe (1) for automatically connecting and disconnecting electrical terminals upon removal and insertion of the housing (2) from and into the mounting pipe (1).

5. The device according to any one of claims 1 to 4, **characterized in that** the housing (2) comprises an access area (7) to be disconnected from the installation area (6) and/or that the housing (2) is substantially formed of two semi-cylindrical shells (6, 7).

6. The device according to any one of claims 1 to 5, **characterized in that** the housing (2) is demountable from or insertable into the mounting pipe (1) without any tool.

7. The device according to any one of claims 1 to 6, **characterized by** a control device for the ventilator (3), wherein it is particularly provided that the control device comprises at least one temperature sensor and/or that the control device has at least one timing function.

8. The device according to any one of claims 1 to 7, **characterized by** at least one filter element that is arranged in the area of the mounting pipe (1).

9. The device according to any one of claims 1 to 8, **characterized in that** the mounting pipe (1) is multilayered and/or that the mounting pipe (1) comprises at least one noise absorbing layer and/or that the mounting pipe (1) comprises at least one insulation layer and/or that the mounting pipe (1) is provided on its inner wall with an antimicrobial coating.

10. The device according to any one of claims 1 to 9, **characterized in that** the housing (2) in the area of a frame (16) has an inner cover (17) with flow conducting means.

## Revendications

1. Dispositif d'aération et d'évacuation d'air pour bâtiment comprenant un tube de montage (1) pouvant être encastré dans un mur (18) d'un bâtiment, comprenant un boîtier (2) de forme tubulaire disposé de manière amovible dans le tube de montage (1), comprenant au moins un ventilateur (3) disposé dans le boîtier (2) et comprenant au moins un élément récupérateur de chaleur (4, 5) disposé dans le boîtier (2),
**caractérisé en ce**
**que** le boîtier (2) est disposé de manière à pouvoir tourner dans le tube de montage (1),
**qu'**un élément de butée (10) pourvu d'au moins un évidement (11), divisant à la manière d'une cloison de séparation le tube de montage (1) est disposé dans le tube de montage (1) de manière à être attenant à un côté situé côté extérieur du tube de montage (1),
**qu'**un élément de fermeture (14) pourvu d'au moins un évidement (15), délimitant à la manière d'une cloison de séparation la section transversale du boîtier (2) est disposé côté extrémité au niveau du boîtier (2), que l'élément de butée (10) et l'élément de fermeture (14) peuvent être amenés en appui l'un contre l'autre de manière étanche et peuvent tourner l'un par rapport à l'autre, sachant que les évidements (11, 15) peuvent être disposés au même niveau les uns par rapport aux autres dans une position d'ouverture ou au moins en partie de manière décalée les uns par rapport aux autres, et
**que** des moyens de contact (19, 20) électriques sont disposés au niveau de la zone d'extrémité située côté intérieur du tube de montage (1) et de la zone d'extrémité située côté intérieur du boîtier (2) aux fins de la connexion et de la déconnexion automatiques des raccords électriques.

2. Dispositif selon la revendication 1, **caractérisé en ce que** l'élément de butée (10) peut être déplacé par coulissement de manière élastique dans la direction axiale et/ou que l'élément de butée (10) et l'élément de fermeture (14) sont réalisés de manière à présenter une forme de plaque et peuvent être amenés en appui l'un contre l'autre de manière étanche.

3. Dispositif selon la revendication 1 ou 2, **caractérisé en ce que** le boîtier (2) peut être fixé dans la direction axiale au moyen d'une fermeture à baïonnette (21) dans le tube de montage (1), et en particulier qu'un angle de rotation de la fermeture à baïonnette (21) est plus grand qu'un angle de rotation servant à ouvrir et à fermer les évidements (11, 15) orientés les uns par rapport aux autres de l'élément de butée (10) et de l'élément de fermeture (14).

4. Dispositif selon l'une quelconque des revendications 1 à 3, **caractérisé en ce que** deux éléments récupérateurs de chaleur (4, 5) sont prévus et le ventilateur (3) est disposé dans la direction axiale entre les éléments récupérateurs de chaleur (4, 5) et/ou que le boîtier (2) comprend une zone d'installation (6), sachant que la zone d'installation (6) comprend des raccords électriques au moins pour le ventilateur, et/ou qu'au moins une connexion de contact électrique comprenant les moyens de contact (19, 20) est prévue entre le boîtier (2) et le tube de montage (1) aux fins de la connexion et de la déconnexion automatiques des raccords électriques lors du retrait et de l'encastrement du boîtier (2) hors du et dans le tube de montage (1).

5. Dispositif selon l'une quelconque des revendications 1 à 4, **caractérisé en ce que** le boîtier (2) comprend une zone d'accès (7) à déconnecter de la zone d'installation (6) et/ou que le boîtier (2) est réalisé essentiellement à partir de deux coques (6, 7) semi-cylindriques.

6. Dispositif selon l'une quelconque des revendications 1 à 5, **caractérisé en ce que** le boîtier (2) peut être démonté du tube de montage (1) ou être encastré dans celui-ci sans outil.

7. Dispositif selon l'une quelconque des revendications 1 à 6, **caractérisé par** un dispositif de contrôle pour le ventilateur (3), sachant qu'il est prévu en particulier que le dispositif de contrôle comprenne au moins un capteur de température et/ou que le dispositif de contrôle présente au moins une fonction de contrôle du temps.

8. Dispositif selon l'une quelconque des revendications 1 à 7, **caractérisé par** au moins un élément filtrant disposé dans la zone du tube de montage (1).

9. Dispositif selon l'une quelconque des revendications 1 à 8, **caractérisé en ce que** le tube de montage (1) est réalisé de manière multicouche et/ou que le tube de montage (1) comprend au moins une couche d'insonorisation et/ou que le tube de montage (1) comprend au moins une couche isolante et/ou que le tube de montage (1) est pourvu, au niveau de sa paroi intérieure, d'un revêtement antimicrobien.

10. Dispositif selon l'une quelconque des revendications 1 à 9, **caractérisé en ce que** le boîtier (2) comprend, dans la zone du bâti dormant (16), un recouvrement intérieur (17) pourvu de moyens conducteurs d'écoulement.
